Europäisches Patentamt

European Patent Office

Office européen des brevets

(11) Numéro de publication: **0 341 178**
**A1**

## DEMANDE DE BREVET EUROPEEN

(21) Numéro de dépôt: **89460012.1**

(22) Date de dépôt: **03.05.89**

(51) Int. Cl.⁴: **G 11 B 33/04**

(30) Priorité: **06.05.88 FR 8806332**

(43) Date de publication de la demande:
**08.11.89 Bulletin 89/45**

(84) Etats contractants désignés:
**BE CH DE ES GB IT LI**

(71) Demandeur: **SELECTION DISQUES DE L' OUEST**
**Rue du Breil**
**F-35135 Chantepie (FR)**

(72) Inventeur: **Blazere, Jacques Yves Albin Eugène**
**La Daguinais**
**F-35340 Liffre (FR)**

(74) Mandataire: **Martin, Jean-Jacques et al**
**Cabinet REGIMBEAU 11, rue Franz Heller Centre**
**d'Affaires Patton B.P. 19107**
**F-35019 RennesCedex (FR)**

(54) Conditionnement antivol pour un article plat, de forme générale rectangulaire.

㉗ La présente invention concerne un conditionnement antivol (1) comprenant un boîtier à fermeture inviolable destiné à recevoir un article sensiblement plat et de forme générale rectangulaire, ainsi qu'une partie (2) formant prolongement dudit boîtier, destinée à donner au conditionnement des dimensions sensiblement plus grandes que celles du boîtier, ledit boîtier présentant au moins deux fenêtres (30, 53) :
- la première (30), située sur l'une de ses grandes faces (3) rendant visible la grande face correspondante de l'article ;
- la seconde (53), située sur l'un de ses chants (5), opposé à la partie formant prolongement, rendant visible le chant correspondant de l'article ;
caractérisé en ce qu'il est prévu à l'intérieur dudit boîtier des moyens de centrage et de positionnement (34, 34', 35, 35' - 43, 43', 44, 44') de l'article, agencés de façon à permettre le maintien de l'article à l'intérieur du boîtier dans deux positions différentes, décalées de 90° :
   a) une première position dans laquelle le grand axe dudit article est parallèle au grand axe (E) du conditionnement ;
   b) une seconde position dans laquelle le grand axe dudit article est perpendiculaire au grand axe (E) du conditionnement.

FIG.1

**EP 0 341 178 A1**

## Description

## CONDITIONNEMENT ANTIVOL POUR UN ARTICLE PLAT, DE FORME GENERALE RECTANGULAIRE

La présente invention concerne un conditionnement antivol qui comprend un boîtier à fermeture inviolable. Un tel boîtier est destiné à recevoir un article sensiblement plat et de forme générale rectangulaire, tel que le coffret d'un disque audionumérique (plus généralement désigné par la marque déposée "Compact Disc").

Les vols répétés d'articles de petites dimensions, en particulier dans les grandes surfaces, ont amené de nombreuses personnes à concevoir des conditionnements antivol d'objets, de dimensions suffisantes pour que ces articles ne puissent être dissimulés dans une poche de vêtement ou dans un sac.

C'est ainsi que l'on a déjà proposé un conditionnement antivol pour des cassettes musicales. Ce conditionnement comprend un boîtier destiné à recevoir le coffret contenant la cassette. Il comprend également un prolongement qui forme la poignée du dispositif. Les dimensions du boîtier sont sensiblement égales à celles de la cassette. On notera que le grand axe de la cassette est perpendiculaire au grand axe du conditionnement. Les deux grandes faces ainsi que l'un des chants du boîtier sont munis de fenêtres qui permettent d'avoir accès aux informations (titre de l'oeuvre, nom de l'interprète) que portent les grandes faces et le chant correspondant du coffret de la cassette (ci-après dénommé cassette).

Le boîtier a la forme de deux demi-coquilles qui sont refermées sur la cassette lors du conditionnement en usine, de manière inviolable. Généralement cette fermeture se fait par emboîtement irréversible de languettes portées par l'une des deux demi-coquilles dans des ouvertures prévues dans l'autre. Il est nécessaire de casser ou découper les languettes pour ouvrir le boîtier et en dégager la cassette.

Des ensembles de ce genre - cassette/conditionnement - sont généralement réunis et empilés les uns sur les autres, sur des présentoirs en vue de leur commercialisation. L'acheteur peut choisir l'exemplaire désiré par simple lecture des informations mentionnées sur le chant de la cassette, à travers la fenêtre pratiquée dans le conditionnement. Certains commerçants préfèrent, quant à eux, suspendre les conditionnements par leur poignée, à des présentoirs. Or, sur la plupart des coffrets rectangulaires qui contiennent des cassettes musicales ou des disques audio-numériques, les informations qui sont inscrites sur l'une au moins de leurs grandes faces (titre, photo, dessin, ...) sont disposées transversalement, c'est-à-dire perpendiculairement au grand axe du coffret. Si le conditionnement est suspendu (grand axe disposé verticalement), ces informations sont donc difficilement lisibles à travers la fenêtre du conditionnement, l'acheteur devant pencher la tête sur le côté pour les lire correctement.

La présente invention vise à résoudre ce problème en proposant un nouveau conditionnement antivol du genre évoqué, adapté pour recevoir un article sensiblement plat et de forme générale rectangulaire, qui permette à un acheteur d'avoir accès très facilement aux informations présentes sur l'article, quel que soit son mode de présentation dans un rayon. Ce conditionnement est donc particulièrement bien adapté pour recevoir des coffrets contenant un disque audio-numérique ou une cassette musicale.

Le conditionnement qui fait l'objet de l'invention et qui permet d'atteindre les résultats énumérés plus haut comprend, comme déjà mentionné, un boîtier ainsi qu'un prolongement destiné à donner au conditionnement des dimensions sensiblement plus grandes que celles du boîtier, ledit boîtier présentant au moins deux fenêtres :
- la première, située sur l'une de ses grandes faces, rendant visible la grande face correspondante de l'article ;
- la seconde, située sur l'un de ses chants, opposé à la partie formant prolongement, rendant visible le chant correspondant de l'article ;

Ce conditionnement est caractérisé en ce qu'il est prévu à l'intérieur dudit boîtier des moyens de centrage et de positionnement de l'article, agencés de façon à permettre le maintien de l'article à l'intérieur du boîtier dans deux positions différentes, décalées de 90° :

a) une première position dans laquelles le grand axe dudit article est parallèle au grand axe du conditionnement ;

b) une seconde position dans laquelle le grand axe dudit article est perpendiculaire au grand axe du conditionnement.

Par ailleurs, selon un certain nombre de caractéristiques avantageuses (mais non limitatives) :
- lesdits moyens de centrage et de positionnement consistent en des pavés solidaires du boîtier ;
- lesdits pavés sont disposés aux quatre sommets d'un carré dont le côté (a) est sensiblement égal à la largeur dudit article ;
- ledit prolongement a la forme d'une poignée ;
- lesdits moyens de centrage et de positionnement sont portés par les grandes faces dudit boîtier.

D'autres caractéristiques et avantages de l'invention apparaîtront de la description et des dessins annexés qui en représentent un mode de réalisation préférentiel ; sur ces dessins :

- la figure 1 représente, en vue de face, un conditionnement antivol qui ne contient aucun article, boîtier ouvert ;

- la figure 2 est une vue en coupe du même conditionnement, selon le plan (I-I) de la figure 1 ;

- la figure 3 représente très schématiquement, le principe du positionnement d'un article à l'intérieur du boîtier ;

- les figures 4a et 4b représentent respectivement, en vues de face et en bout, un conditionnement antivol conforme à l'invention qui renferme le coffret d'un disque audionumérique ;

- les figures 5a et 5b représentent le même conditionnement que celui illustré aux figures 4a et 4b, le coffret du disque étant dans une position différente, décalée à 90°.

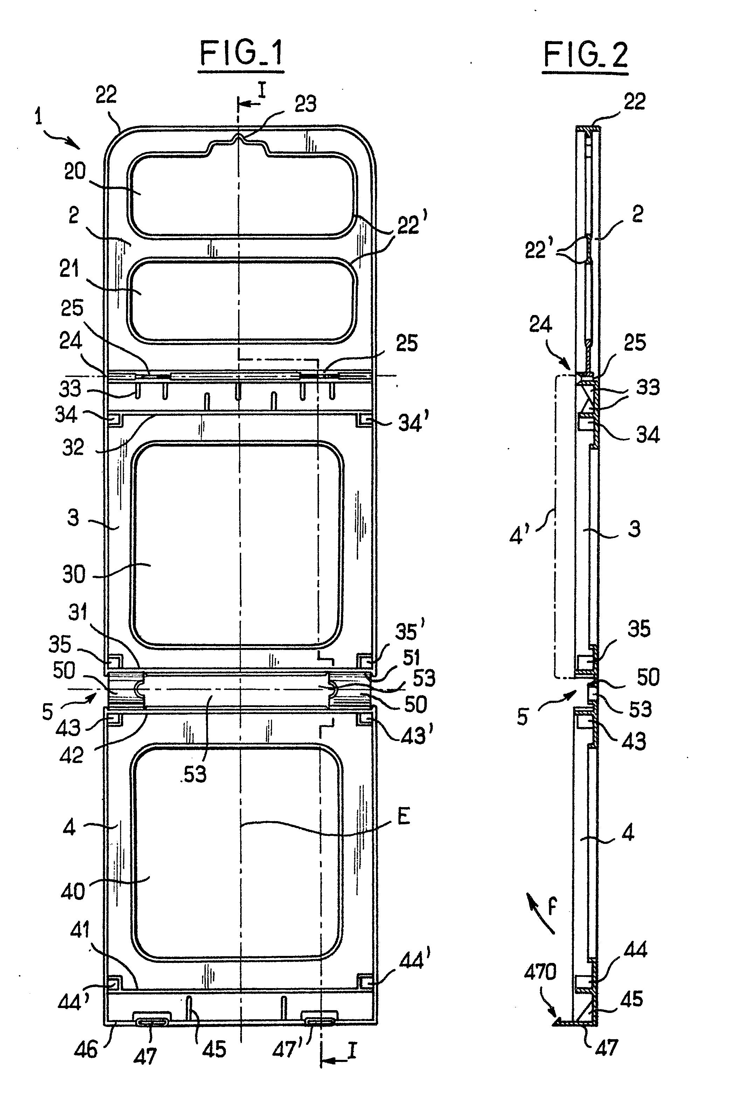

En référence à la figure 1, on a représenté, en vue de face, un conditionnement antivol ouvert, qui ne contient aucun article. Un tel conditionnement est destiné à recevoir le coffret d'un disque audionumérique. Ce conditionnement est réalisé, par exemple, en matière plastique moulée. Le polypropylène est un matériau particulièrement approprié. Comme on le voit très nettement sur cette figure, le conditionnement 1 comporte trois parties principales qui portent respectivement les références numériques 2, 3 et 4. La partie 2 - ou prolongement - présente une forme générale rectangulaire dont les angles opposés à la partie 3 sont arrondis. Le prolongement 2 comporte des ouvertures 20 et 21. Le rôle de ces ouvertures est d'alléger le conditionnement en diminuant la quantité de matière rentrant dans la fabrication du prolongement 2 ; l'ouverture supérieure 20 sert en outre de poignée. Le prolongement 2 permet d'augmenter de façon sensible les dimensions du conditionnement 1. On notera que l'ouverture 20 comporte dans sa partie supérieure une échancrure 23 qui autorise la suspension du conditionnement aux tiges d'un présentoir. Le prolongement 2 et les ouvertures 20-21 sont munis à leur périphérie de nervures 22 et 22' qui rigidifient l'ensemble.

Enfin on remarque que le prolongement 2 est muni, au niveau de l'épaisseur 24 d'un système de fermeture 25.

Les parties 3 et 4 forment, quand elles sont réunies, les deux grandes faces du boîtier du conditionnement 1. Chacune de ces faces 3 et 4, de forme rectangulaire, est garnie d'une fenêtre de forme générale carrée, les fenêtres portant respectivement les références 30 et 40. Celles-ci rendront visibles les grandes faces de l'objet renfermé dans le boîtier.

On notera que les faces 3 et 4 sont reliées l'une à l'autre à l'aide d'une portion de chant 5 composée de deux languettes 50. Les bords 51 de ces languettes présentent une épaisseur inférieure à celle du reste de languette de sorte que la face 4, peut être facilement rabattue sur la face 3. Les languettes 50 jouent donc le rôle de charnières permettant le rabattement à 180° de la partie 4 sur la partie 3 et donc la fermeture du boîtier dont elles constituent les deux faces. Ces languettes sont séparées par un espace libre 53, qui constitue une fenêtre située sur le chant 5 lorsque le boîtier est fermé.

Les bords 31 et 32 ainsi que les parois qui leur sont perpendiculaires, définissent une figure géométrique carrée. Il en est de même pour les bords 41 et 42 ainsi que les parois qui leur sont perpendiculaires.

La face 3 comporte, dans une zone comprise entre le bord 32 et l'épaisseur 34 des nervures de renforcement 33 (voir également sur la figure 2). De la même façon, la face 4 comporte, dans un zone comprise entre le bord 41 et le bord 46, des nervures de renforcement 45.

Le bord 46 de la partie 4 est pourvu de moyens de fermeture 47 destinés à coopérer avec ceux montés sur l'épaisseur 24.

Enfin, on note, et ceci est particulièrement important, que chacune des faces 3 et 4 est pourvue, à chacun de ses angles, de pavés - 34, 34', 35, 35' - et - 43, 43', 44, 44' -. Ce sont en fait des demi-pavés, destinés à former des pavés complets lorsque le boîtier est refermé.

On entend par "pavés" de petits têtons en relief qui, dans l'exemple représenté, ont une forme carrée.

Un tel conditionnement est réalisé d'une seule pièce, par exemple par moulage ou par injection.

On remarque sur la figure 2 que les bordures 22 et 22' du prolongement 2 présentent des épaisseurs sensiblement différentes. Les parties 3 et 4, reliées entre elles par le chant 5, comportent à chacun de leurs angles, les pavés déjà décrits (sur cette figure seulement deux pavés par face sont visibles ; 34 et 35 pour la face 3 ; 43 et 44 pour la face 4).

Le système de fermeture du conditionnement est constitué d'une paire d'éléments latéraux complémentaires 25, 47. Les éléments 25, qui sont situés au niveau de l'épaisseur 24 présentent des fentes transversales (éléments femelles). Les éléments 47 sont des éléments mâles en forme générale de languettes, qui présentent à leur extrémité libre un ergot ou crochet 470.

Après avoir positionné un objet sur la face 3, entre les pavés 34, 34', 35 et 35' on rabat à 180°, dans le sens de la flèche (f) la face 4 du conditionnement. Le chant 5 se plaque contre le côté des faces 3 et 4. Lorsque le conditionnement est fermé, la face 4 occupe la position qui a été délimitée par la référence 4'. Dans cette position, les pavés 43 et 44 sont situés en regard des pavés 35 et 34, emprisonnant ainsi l'objet. Les éléments mâles 47 viennent se loger à l'intérieur des fentes que présente la pièce 25, l'ergot 470 empêchant alors toute ouverture ultérieure du système de fermeture. Il est nécessaire, pour libérer l'article de couper une ou plusieurs portions du conditionnement et de l'ôter de son logement. Le système est donc inviolable.

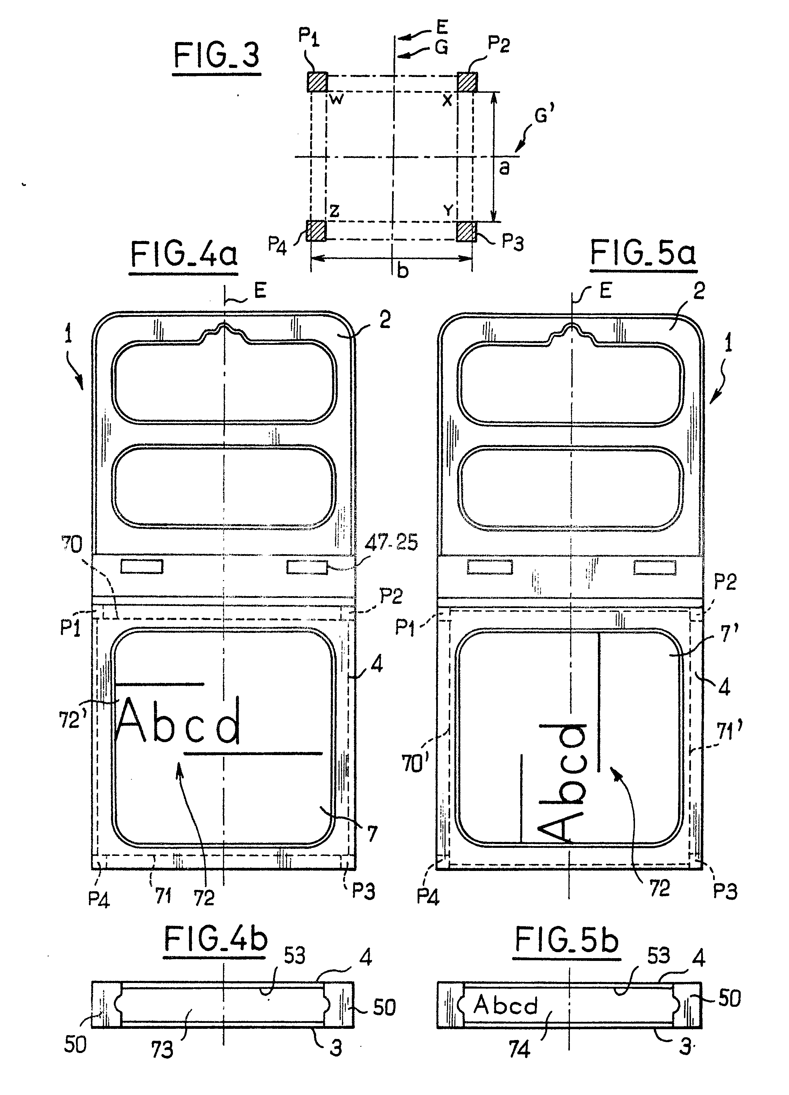

On a illustré, en référence à la figure 3, le principe de positionnement d'un article à l'intérieur du boîtier. Sur cette figure, on constate que les pavés (P₁), (P₂), (P₃) et (P₄) sont disposés au sommet d'un carré (W, X, Y, Z) de côté (a). Ce côté (a) est sensiblement égal à la largeur de l'article contenu dans le boîtier. Cet article qui présente une longueur (b) peut, de cette façon, occuper deux positions différentes :
- une première position dans laquelle le grand axe (G) de l'article est parallèle à l'axe (E) qui représente le grand axe du conditionnement ;
- une seconde position dans laquelle le grand axe (G') de l'article est perpendiculaire au grand axe (E) du conditionnement.

Dans chacune de ces positions, angulairement décalée de 90°, l'article est donc encastré entre les pavés et ainsi correctement maintenu en place dans le boîtier.

Les figures 4a et 4b représentent, de face et en bout, un conditionnement antivol, conforme à l'invention, qui renferme le coffret d'un disque audionumérique de forme légèrement rectangulaire. A titre indicatif, un tel coffret présente les dimensions suivantes : longueur 142 mm et largeur 125 mm. Tel qu'il est représenté à la figure 4a, le conditionnement 1 est par exemple suspendu, au niveau du prolongement 2, à la tige ou au crochet d'un présentoir. La fenêtre pratiquée dans la face laisse apparaître l'une des faces 72 du coffret 7 d'un disque audionumérique. Il s'agit par exemple de l'une des grandes faces du coffret qui porte des informations 72' "Abcd" relatives à l'oeuvre interprétée. On a représenté, en traits discontinus, les deux des grands côtés 70-71 du coffret de disque. Ceux-ci sont perpendiculaires au grand axe (E) du conditionnement. Dans cette position, le coffret est maintenu en place entre les pavés P₁, P₂, P₃, P₄, et les informations 72' sont accessibles au lecteur dans le bon sens, à travers la fenêtre.

La figure 4b représente, vu en bout, le conditionnement qui vient d'être décrit. Les languettes 50 qui relient les faces 3 et 4 du conditionnement sont séparées par un espace qui laisse apparaître l'un des chants 73 du coffret de disque ; ce chant correspond à l'un des grands côtés du coffret. Sur les coffrets de disques audionumériques qui sont actuellement sur le marché, ces grands côtés ne portent aucune information, au contraire des petits côtés qui, de façon générale portent mention de l'oeuvre et de son interprète. On constate donc qu'un empilement de conditionnements de ce type, par exemple sur une étagère, ne convient pas puisqu'aucune information n'est visible pour l'acheteur ; celui-ci est obligé de les relever un par un pour accéder aux informations recherchées.

Les figures 5a et 5b, représentent, quant à elles, le même conditionnement que celui représenté aux figures précédentes. Toutefois, le coffret de disque qui y est enfermé, est décalé de 90° par rapport à sa position précédente. Ainsi, les grands côtés 70' et 71' du coffret de disque 7' sont parallèles au grand axe (E) du conditionnement. De cette façon, lorsque le conditionnement est suspendu à un présentoir (figure 5a), les informations 72 qui sont présentes sur l'une des grandes faces du disque 7' ne sont pas directement accessibles aux acheteurs puisqu'elles sont placées de côté. Par contre, comme le montre la figure 5b les informations 74 placées sur l'un des petits côtés du coffret sont visibles. Cette disposition du coffret dans le boîtier convient donc lorsque les conditionnements sont empilés les uns sur les autres, les informations étant alors directement accessibles au lecteur.

Ces quatre dernières figures montrent que le conditionnement de l'invention convient bien pour la présentation et la vente d'articles de petites dimensions, rectangulaires et sensiblement plats puisqu'il autorise le positionnement de cet article, de deux façons différentes qui permettent à l'acheteur de faire son choix quel que soit le mode de présentation de l'article (à plat ou suspendu).

La manière dont l'article est conditionné en usine va donc être faite en fonction du type de présentoir auquel il est destiné.

A titre indicatif, le conditionnement que l'on a décrit précédemment présente les dimensions suivantes : longueur : 300 mm ; largeur : 148 mm.

A titre de variante, il est possible de remplacer le prolongement du conditionnement par tout système d'anse ou de poignée qui permette de donner à l'ensemble du dispositif des dimensions suffisantes empêchant son introduction dans une poche de vêtement ou dans un sac.

Le conditionnement décrit s'applique bien à des articles tels que les coffrets de disques audio-numériques et des cassettes musicales. Bien entendu moyennant quelques modifications mineures, il est également susceptible de s'appliquer à d'autres objets de petites dimensions, sensiblement plats et rectangulaires tels que des coffrets de cassettes vidéo, des livres, des boîtes de cigares par exemple.

Enfin, les pavés ou autres moyens qui permettent de positionner l'objet à renfermer pourraient être amovibles et être fixés au boîtier du conditionnement, par exemple par encliquetage. De cette manière, il serait possible d'adapter le conditionnement à la forme et dimensions exactes de l'article contenu, en jouant sur les dimensions des pavés utilisés.

**Revendications**

1. Conditionnement antivol (1) comprenant un boîtier à fermeture inviolable destiné à recevoir un article sensiblement plat et de forme générale rectangulaire, ainsi qu'une partie (2) formant prolongement dudit boîtier, destinée à donner au conditionnement des dimensions sensiblement plus grandes que celles du boîtier, ledit boîtier présentant au moins deux fenêtres (30, 53) :
- la première (30), située sur l'une de ses grandes faces (3), rendant visible la grande face correspondante de l'article ;
- la seconde (53), située sur l'un de ses chants (5), opposé à la partie formant prolongement, rendant visible le chant correspondant de l'article ;
caractérisé en ce qu'il est prévu à l'intérieur dudit boîtier des moyens de centrage et de positionnement (34, 34', 35, 35' - 43, 43', 44, 44') de l'article, agencés de façon à permettre le maintien de l'article à l'intérieur du boîtier dans deux positions différentes, décalées de 90° :

a) une première position dans laquelle le grand axe dudit article est parallèle au grand axe (E) du conditionnement ;

b) une seconde position dans laquelle le grand axe dudit article est perpendiculaire au grand axe (E) du conditionnement.

2. Conditionnement selon la revendication 1 caractérisé en ce que lesdits moyens de centrage et de positionnement consistent en des pavés solidaires du boîtier.

3. Conditionnement selon la revendication 2 caractérisé en ce que lesdits pavés sont disposés aux quatre sommets d'un carré dont le côté (a) est sensiblement égal à la largeur dudit article.

4. Conditionnement selon l'une des revendication 1 à 3 caractérisé en ce que ledit prolongement (2) a la forme d'une poignée.

5. Conditionnement selon l'une des revendications 1 à 4 caractérisé en ce que lesdits moyens de centrage et de positionnement sont portés par les grandes faces dudit boîtier.

6. Conditionnement selon l'une des revendications 1 à 5, caractérisé en ce qu'il est adapté pour recevoir un coffret de disque audionumérique.

## FIG.1

## FIG.2

FIG. 3

FIG. 4a

FIG. 5a

FIG. 4b

FIG. 5b

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| A | US-A-4634004 (MORTENSEN)<br>* colonne 3, ligne 31 - colonne 5, ligne 14; figures 1-6 * | 1, 4 | G11B33/04 |
| A | US-A-4623062 (CHASE ET AL.)<br>* colonne 3, ligne 53 - colonne 7, ligne 66; figures 1-7 * | 1, 6 | |
| A | US-A-4572369 (MORRIS)<br>* colonne 2, ligne 46 - colonne 4, ligne 42; figures 1-8 * | 1, 4 | |
| A | EP-A-157056 (GUILIOT)<br>* page 3, ligne 5 - page 4, ligne 25; figures 1-2 * | 1, 6 | |

DOMAINES TECHNIQUES
RECHERCHES (Int. Cl.4 )

G11B
B65D

Le présent rapport a été établi pour toutes les revendications

| Lieu de la recherche | Date d'achèvement de la recherche | Examinateur |
|---|---|---|
| LA HAYE | 01 AOUT 1989 | SPIGARELLI A. |